# EUROPÄISCHE PATENTSCHRIFT

(11) **EP 2 315 917 B1**
(45) Veröffentlichungstag und Bekanntmachung des Hinweises auf die Patenterteilung: **01.03.2017**
(21) Anmeldenummer: 09775980.7
(22) Anmeldetag: 17.07.2009
(51) Int. Cl.: F01D 5/14

(54) **SCHAUFEL EINER STRÖMUNGSMASCHINE MIT VORTEX-GENERATOR**
BLADE FOR A TURBOMACHINE WITH A VORTEX-GENERATOR
AUBE D'UNE TURBOMACHINE COMPORTANT UN GÉNÉRATEUR DE VORTEX

(30) Priorität: 19.07.2008 DE 102008033861
(43) Veröffentlichungstag der Anmeldung: 04.05.2011
(73) Patentinhaber: MTU Aero Engines AG, 80995 München (DE)
(72) Erfinder: FIALA, Andreas, 80339 München (DE); GIER, Jochen, 85757 Karisfeld (DE)
(86) Internationale Anmeldenummer: PCT/DE2009/000998
(87) Internationale Veröffentlichungsnummer: WO 2010/009707

(56) Entgegenhaltungen:
- EP-A1- 0 850 832
- EP-A1- 1 081 332
- DE-C- 681 479
- GB-A- 2 436 861
- US-A- 3 578 264
- US-B1- 6 358 012

## Beschreibung

Die vorliegende Erfindung betrifft eine Schaufelkonstruktion mit Vortex-Generator bzw. Wirbelerzeuger in Form einer zumindest partiellen Oberflächeneigenschaft gemäß dem Oberbegriff des Patentanspruchs 1.

Derartige Schaufelkonstruktionen finden sich beispielsweise bei Rotoren und Schaufelgittern (Lauf- und/oder Leitschaufeln) von Niederdruckturbinen eines Flugzeugantriebs.

Die Beeinflussung einer Strömung insbesondere der Oberflächen-nahen Grenzschicht durch Wirbelerzeuger (auch Turbulatoren genannt) ist eine zumindest auf Forschungsebene in erheblichem Umfang untersuchte Thematik. Grundsätzlich entsteht die Grenzschicht aus der Wandreibung der strömenden Teilchen und bildet die strömungstechnische Brücke zwischen dem Profil und der idealen, nicht von der Wandreibung beeinträchtigten Strömung in einigem Abstand von der umströmten Profilwand. Die Dicke der Grenzschicht ist dabei von der Reynolds-Zahl abhängig. Mit zunehmender Weglänge der Strömung entlang der Profilwand nimmt diese Dicke der Grenzschicht fortlaufend zu. Schließlich beginnen die Strömungsteilchen, das laminare Strömungsverhalten (laminare Grenzschicht) aufzugeben und mehr oder weniger starke Querbewegungen (turbulente Grenzschicht) auszuführen. Der Übergang von der laminaren Grenzschicht in die turbulente Grenzschicht (auch Umschlagbereich genannt) hängt dabei von einer Reihe von Einflussgrößen, u.a. der Oberflächenrauhigkeit der umströmten Profilwand, Druckgradienten, Geschwindigkeits- sowie Druckstörungen der Außenströmung wie auch von der lokalen Reynolds-Zahl ab.

Bei ähnlichem Geschwindigkeitsverlauf längs der Außenströmung erzeugt eine turbulente Grenzschicht mehr Reibungswiderstand als eine laminare Grenzschicht, im Gegenzug jedoch eine geringere Ablöseneigung besitzt. Der Reibungswiderstand und die durch die Ablösung veränderte Druckverteilung um das Profil bewirken den Profilverlust. Ein solches Ablösen der Grenzschicht insbesondere an einer Profilober- bzw.

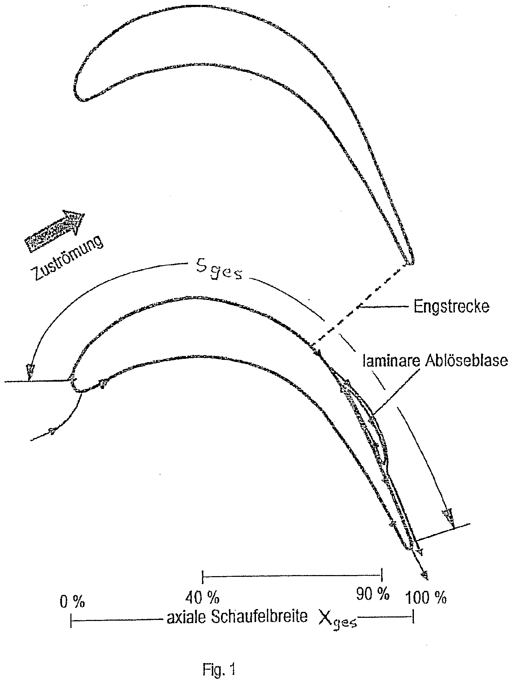

Saugseite tritt im Wesentlichen dann auf, wenn Teilchen auf Profilwand-nahen Strombahnen in der Grenzschicht infolge zu geringer Strömungsenergie nicht mehr weiter verzögert werden können. Sie weichen in der Folge quer aus und es bildet sich dann eine sogenannte Ablöseblase, wie sie in der Fig. 1 schematisch dargestellt ist. Mit sinkender Reynoldszahl wächst die Ablösung in ihrer Länge immer mehr an, bis sie in das Gebiet stromab der Profilhinterkante reicht, sodass die durch das Profil geforderte Umlenkung nicht mehr erreicht werden kann. Kein Strömungsteilchen erreicht in seitlichem Mittel stromab der Ablösung nahe der Profilwand jemals wieder die Profiloberflächedie Strömung kann dem Profil nicht mehr folgen und reißt sozusagen ab.

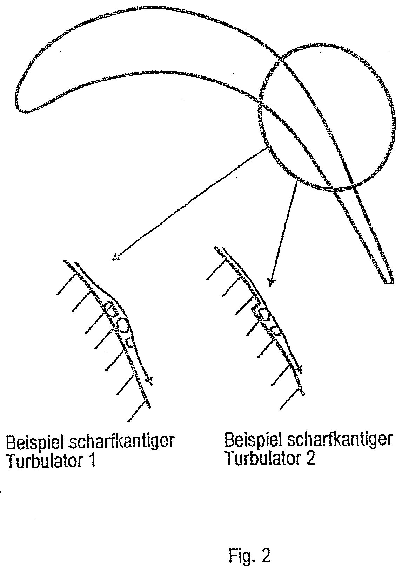

Um nun das Abreißverhalten der Strömung längs eines Profils und den Profilverlust positiv zu beeinflussen indem die Größe der Ablöseblase kontrolliert wird, werden im Stand der Technik verschiedene Lösungsansätze zur Anordnung fester Turbulatoren verfolgt, die sämtlich zur Aufgabe haben, die laminare Grenzschicht in eine turbulente Grenzschicht weiter stromauf am Profil umschlagen zu lassen. Zwei Beispiele für derartige Turbulatoren sind in der anliegenden Fig. 2 dargestellt. Demzufolge besteht die Möglichkeit, Turbulatoren durch scharfkantige Vorsprünge auf der Profiloberseite oder durch scharfkantige Einkerbungen (Rücksprünge) in der umströmten Wand zu erzeugen.

Bei Leit- und Rotorschaufeln einer Strömungsmaschine insbesondere einer Niederdruckturbine erweisen sich derart ausgebildete scharfkantige Turbulatoren jedoch insofern als nachteilig, als dass sie nur in größeren Flughöhen, etwa der Reiseflughöhe eines Flugzeugs, bei den dort geringen Strömungs-Reynoldszahlen und bei hohen Schaufelbelastungen in vorteilhafte Weise durch ein rechtzeitiges Turbulentwerden der Strömung die Ablöseblase verkleinern und dadurch den Profilverlust und den Wirkungsgrad verbessern, in Bodennähe jedoch die Verluste erhöhen. Außerdem ist bei scharfkantigen Turbulatoren die Fertigung, Beschichtung und Standzeit äußerst kritisch. Daher ist derzeit keine praktische Anwendung von Turbulatoren in einem Triebwerk bekannt.

Als ein hinsichtlich der vorliegenden Erfindung relevanter Stand der Technik sei in dieser Hinsicht die EP 132 638 B1 der Erfinderin selbst genannt. Aus dieser Druckschrift ist ein axial durchströmtes Schaufelgitter einer Turbine bekannt, dessen Schaufelprofile so ausgebildet sind, dass die Strömung entlang des größten Teils der saugseitigen Profiloberfläche bis zu einem Geschwmdigkeitsmaximum im Bereich der Kanalengfläche beschleunigt wird und stromab davon bis zur Profilhinterkante verzögert wird. Jede Schaufel ist mit einer Störkante versehen, die stromabwärts des Geschwindigkeitsmaximums auf der Saugseite der Schaufel im Bereich der verzögerten Strömung angeordnet ist und sich im wesentlichen über die ganze Schaufelhöhe (Strecke von Schaufelwurzel bis Schaufelspitze) erstreckt.

Um die eingangs genannten negativen Effekte eines scharfkantigen Turbulators auf die Hauptströmung (Anstieg des Reibungsverlusts) insbesondere bei hohen Reynoldszahlen zu verringern, sieht die EP 132 638 B1 unter anderem vor, dass die Störkante in einer Tangentialebene zur Profiloberfläche sägezahnartig profiliert ist. Hierdurch soll eine Verringerung der notwendigen Kantenhöhe erreicht werden, um so die Reibungsverluste insbesondere bei höheren Reynoldszahlen zu reduzieren. Trotz dieser positiven Effekte bleibt das Problem einer schwierigen Fertigung und geringeren Standzeit ungelöst.

Aus der DE 681 479 C ist eine Leitschaufel für Dampf- und Gasturbinen mit zugeschärfter Austrittskante bekannt, deren Oberfläche kurz vor der Zuschärfung der Austrittskante rauer ist als der übrige Teil.

Die US 3 578 264 A offenbart die Merkmale des Oberbegriffs von Anspruch 1 und schlägt dabei zur Beeinflussung einer Grenzschicht Oberflächenelemente vor, deren Dimensionierung von der Grenzschichtdicke abhängen.

Aus der GB 2 436 861 A ist ein Trägerflächenprofil mit halbsphärischen oder tropfenförmigen Vertiefungen bekannt.

Angesichts dieses Stands der Technik ist es die Aufgabe der vorliegenden Erfindung, eine Schaufel einer Strömungsmaschine mit einem gattungsgemäßen Wirbelarzeuger (Turbulator) zu schaffen, die einfach herstellbar ist und eine längere Standzeit erreicht.

Diese Aufgabe wird durch eine Schaufel einer Strömungsmaschine mit einem längs der Schaufel sich erstreckenden, wellenförmigen (kantenlosen) Wirbelerzeuger gemäß dem Patentanspruch 1 gelöst. Weitere vorteilhafte Ausgestaltungen der Erfindung sind Gegenstand der übrigen Unteransprüche.

Die Erfindung besteht demzufolge aus einer Schaufelkonstruktion einer Strömungsmaschine, vorzugsweise einer Schaufelgitteranordnung einer Niederdruckturbine, an deren saugseitiger Profiloberfläche stromabwärts des Geschwindigkeitsmaximums, ggf, auch im Bereich des Geschwindigkeitsmaximums beginnend, ein Wirbelerzeuger vorzugsweise in Form einer partiellen geometrischen Oberflächeneigenschaft angeordnet ist. Der Wirbelerzeuger wird weiter vorzugsweise durch eine Schwingung ausführende Oberflächenwellen gebildet, deren Wellenrücken in Form von Wellentälern und Wellenbergen näherungsweise in Schaufelhöhenrichtung verlaufen.

Konkreter ausgedrückt wird zur Erzielung des rechtzeitigen Turbulentwerdens der Strömung (Grenzschicht) auf scharfkantige Einbauten und Modifikationen auf der Schaufelsaugseite verzichtet. Stattdessen werden mehrere kantenlose Wellen auf der Oberfläche der Saugseite angeordnet bzw. ausgebildet. Hierdurch wird der Vorteil erzielt, dass sich die Herstellbarkeit, Beschichtbarkeit und Standzeit der Schaufel gegenüber dem bekannten Stand der Technik verbessert. Die Wirkung des wellenförmigen Wirbelerzeugers auf das Strömungsverhalten im Oberflächen-nahen Bereich ist vergleichbar zu den bekannten scharfkantigen Turbulatoren. Bei hohen Reynolds-Zahlen insbesondere in Bodennähe ist jedoch ein geringerer Wirkungsgradverlust durch Reibung zu beobachten. Darüber hinaus lässt sich eine akustische Triebwerkslärmreduktion von 1-2dB realisieren, d.h. eine 10 - 20%ige Druckamplitudenreduktion.

Erfindungsgemäß verlaufen der Wellenberg und das Wellental in Schaufelhöhenrichtung in einem Winkel von 45° bis 135° zur Meridianprojektion der Strömung außerhalb der Schaufelprofil-Grenzschichten.

Ein wesentlicher Vorteil des erfindungsgemäßen Turbulators ist die direkte Herstellbarkeit innerhalb des Herstellungsprozesses einer Schaufel einer Turbomaschine. Bei gegossenen Gasturbinenschaufeln kann diese Oberflächeneigerischaft/-struktur direkt im Gussmodel ohne merklichen Mehraufwand integriert werden. Es ist aber auch eine nachträgliche Einbringung der erfindungsgemäßen Wellenstruktur möglich. Dies betrifft nicht nur die Neufertigung sondern auch Instandsetzungsfälle. Dadurch ist auch eine Nachrüstung möglich. Zur nachträglichen Einbringung der Wellenstruktur sind formende, wie auch spanabhebende Bearbeitungsverfabren, beispielsweise Drücken, Schleifen und/oder Fräsen aber auch elektrochemisches Abtragen einsetzbar.

Gegenüber dem Stand der Technik wie beispielsweise gemäß der US 6, 416, 289 bzw. der EP 1 081 332 A1, in der ein Streifen mit erhöhter Rauhigkeit beschrieben ist, hat die glatte Wellenform gemäß der Erfindung mehrere Vorteile.

Da es sich bei dem Rauhigkeitsstreifen gemäß dem Stand der Technik um einen Bereich mit unregelmäßige, erhöhter Rauhigkeit handelt, der im normalen Fertigungsprozess (beispielsweise bei gegossener Gasturbinenschaufel) nicht entsteht, muss diese Rauhigkeit nachträglich aufgebracht werden. Demgegenüber können die glatten Wellenturbulatoren (unter dem Begriff "glatt" ist eine Oberflächengüte zu verstehen, die den übrigen Bereichen der Turbinenschaufel entspricht) direkt innerhalb des normalen Fertigungsprozesses eingebracht werden. Eine zusätzliche Rauhigkeitserhöhung gegenüber den übrigen Schaufelbereichen ist für die Wellenturbulatoren nicht erforderlich.

Auch die Funktionsweise der Wellenturbulatoren gemäß der Erfindung ist grundsätzlich verschieden von lokal erhöhter Rauhigkeit. Wenn bei erhöhter Rauhigkeit mindestens die Spitzen aus der wandnahen Schicht des konstanten Schubspannungs-Gradienten herausragen, werden Störungen im Bereich der maximalen Schubspannung (Quer- und Längswirbel) in der Grenzschicht erzeugt, die direkt zu dreidimensionalen Strömungsstrukturen mit vorzeitiger Transition (also weiter stromauf als ohne Rauhigkeit) führen. Im Gegensatz hierzu regen die erfindungsgemäßen Wellenturbulatoren Instabilitäten der Grenzschichtströmung an, die zu "Görtler"-Längswirbeln im konkaven Teil der Wellenlänge führen, ohne diese mit zusätzlichen Wirbeln zu vermischen. Dadurch wird auch der nachteilige Einfluss der Wellenturbulatoren bei höheren Reynolds-Zahlen, wie sie z.B. bei Triebwerken in Bodennähe auftreten, geringer als bei verwirbelnden Turbulatoren konventioneller Bauart.

Es hat sich ferner gezeigt, dass in einer vorzugsweise langwelligen Ausführungsform eine gezielte Anfachung der Grenzschichtinstabilität erzielt wird. Hierfür wird die Wellenlänge in einem Verhältnis von *λ*/s_{ges} = 0,05 bis 0,25 zur Saugseite eingestellt. Die Amplitude ist hierzu in einem Verhältnis von a/s_{ges} = 0,0002 bis 0,0040 zur Saugseitenlänge eingestellt. Die Anzahl der sinusartigen Wellen liegt vorzugsweise zwischen 1 und 4 und sind in einem Bereich von +/- 0,25 S_{ges} um die Position der Engstrecke auf der Saugseite der Schaufel. Die optimalen Werte innerhalb des vorstehenden genannten Bereichs hängen dabei jedoch von den Strömungsbedingungen wie Reynolds-Zahl, Mach-Zahl, Belastung etc. ab. Der Ausdruck "s_{ges}" bedeutet hier die saugseitige Bogenlänge, gemessen vom axial vordersten Vorderkantenpunkt bis zum hintersten Hinterkantenpunkt.

Weiter vorzugsweise ist es möglich, dass in einer kurzwelligen Ausführungsform ebenfalls eine gezielte Anfachung von Instabilitäten durch Frequenzen mit madexaten Anfachungsraten erzielbar ist. Hierfür wird die Wellenlänge in einem Verhältnis von *λ*/s_{ges} = 0,005 bis 0,05 zur Saugseite eingestellt. Die Anzahl der sinusartigen Wellen liegt dann bevorzugt zwischen 2 und 15. Die übrigen Einstellungen entsprechend der vorstehenden Beschreibung.

Weiter ist es vorteilhaft, an einer Turbinenschaufel Ma_{Austritt} = 0,65 und Re_{Austritt} = 200.000) mit voraussichtlich hoher Stufenbelastung (Umlenkung > 100°) und hoher Schaufelbelastung (High Lift. Zweifel-Zahl > 1,0) 3 sinusartige Wellen der Wellenlänge λ/s_{ges} = 0,08 mit konstanter Amplitude a/s_{ges} = 0,001 vorzusehen, deren letzte Wellenlänge an der Stelle der laminaren Ablösung endet. Die Wellenlängen erstrecken sich dabei 20% - 80% über die Spannweitenerstreckung.

Alternativ hierzu kann die Wellenlängen entsprechend einer kurzwelligen Ausführungsform auch λ/s_{ges} =0,03 betragen bei einer Turbinenschaufel mit Re_{Austritt} = 400.000.

Schließlich kann im Fall einer Verdichterschaufel (Ma_{Eintritt} = 0,5 und Re_{Eintritt} 0 300.000) mit laminar/turbulenter Ablöseblase auf der Saugseite diese mit drei sinusartigen Wellen der Wellenlänge λ/x_{ges} = 0,05 mit derselben Amplitude a/x_{ges} = 0,0002 ausgebildet sein, wobei deren letzte Wellenlänge an der Stelle der laminaren Abblösung endet. Der Ausdruck "x_{ges}" bedeutet hier die axiale Gitterbreite im Mittelschnitt. Die Wellenlängen erstrecken sich ebenfalls 20% - 80% über die Spannweitenerstreckung.

Die Erfindung wird nachstehend anhand eines bevorzugten Ausführungsbeispiels unter Bezugnahme auf die begleitenden Zeichnungen näher erläutert.
Fig. 1 zeigt ein benachbartes Schaufelpaar eines Schaufelgitters gemäß dem Stand der Technik ohne Wirbelerzeuger,
Fig. 2 zeigt zwei Beispiele für einen scharfkantigen Turbulator gemäß dem Stand der Technik,
Fig. 3 zeigt zwei benachbarte Schaufeln eines Schaufelgitters gemäß einem bevorzugten Ausfühxungsbeispiel der Erfindung im Querschnitt,
Fig. 4 zeigt eine Schaufel des Schaufelgitters in Meridianansicht, und
Fig.5 zeigt eine kurze und eine lange Oberflächenwelle.

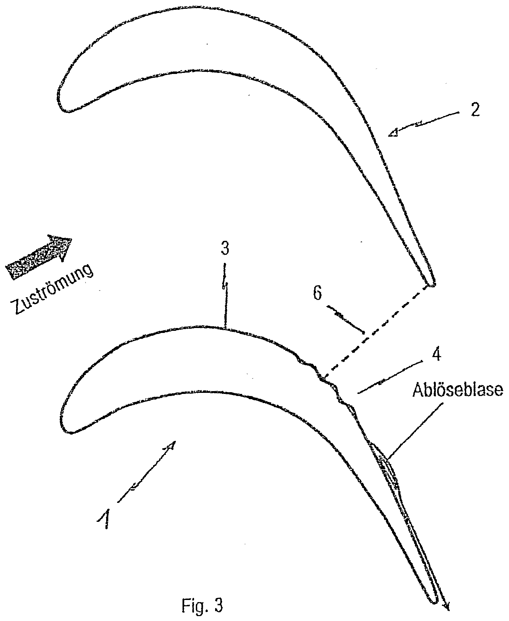

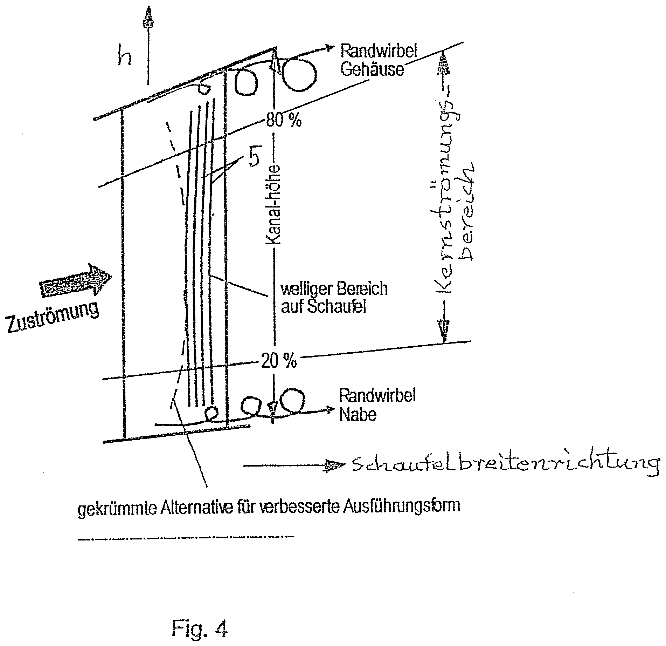

In der Fig. 3 sind zwei benachbarte Schaufeln 1, 2 einer Strömungsmaschine gezeigt, an deren saugseitiger Profiloberfläche 3 stromabwärts des Geschwindigkeitsmaximums ein Wirbelerzeuger 4 angeordnet ist. Der Wirbelerzeuger 4 wird im bevorzugten Ausführungsbeispiel durch eine Anzahl von kantenlosen Oberflächenwellen gebildet, deren Wellenrücken 5 in Form von Wellentälern und Wellenbergen vorwiegend in Schaufelhöhenrichtung h verlaufen, wie dies auch in der Fig. 4 dargestellt ist. Die Wellen 4 sind ferner entlang der Schaufelsaugseite 3 so angeordnet, dass die Strömung über diese Wellen 4 abwechselnd angehoben und abgesenkt wird, d.h. die Wellen 4 verlaufen vorwiegend in Strömungsrichtung (siehe Fig. 4) und erstrecken sich in Schaufelhöhenrichtung h zumindest im Kemströmungsbereich gemäß der Fig. 4 zwischen 20% und 80% rel. der Schaufelhöhe.

Wie aus der Fig. 3 weiter zu entnehmen ist, haben die Wellen 4 eine Sinusform, deren max. Amplituden in Strömungsrichtung konstant sind. Die max. Amplituden und möglicherweise auch die Wellenlängen variieren jedoch in Schaufelhöhen- und/oder in Breitenrichtung, bevorzugt längs der Saugseite mit zunehmender Wellenlänge und zunehmender Amplitude. Anstelle einer Sinuswelle kann auch eine asymmetrische Wellenform vorgesehen sein. Die Wellen 4 sind dabei in einem definierten Bereich auf der Saugseite 3 angeordnet. Dieser Bereich befindet sich in etwa an einer Kanalengstelle 6 der zwei benachbarten Schaufeln 1,2, also in jenem Bereich, in welchem die Strömung bis zu einem Geschwindigkeitsmaximum beschleunigt wurde und dann eine Verzögerung eintritt. Die Wellenrücken 5 (Berge/Täler) verlaufen dabei in Schaufelhöhenrichtung h eben und können sich über die gesamte Schaufelhöhe h oder auch nur über eine Teilhöhe erstrecken, in deren Bereich Sekundarwirbeistrukturen fehlen, wie diese in Fig. 4 eingezeichnet sind. Dabei können sie in Schaufelhöhenrichtung h zu den Sekundärbereichen hin gekrümmte Verläufe aufweisen.

Entlang der axialen Erstreckung der Schaufel (Schaufelbreitenrichtung) überdecken die Wellen 4 einen Teilbereich der Schaufelsaugseite 3, typischerweise einen Bereich, in dem die Grenzschicht bis zur Ablösestelle der Ablöseblase durch den Turbulator in Form der erfindungsgemäßen Wellenausbildung destabilisiert werden kann, um einen rechtzeitigen laminar-turbulenten Umschlag zu bewirken. Dieser Bereich liegt je nach Schaufelprofilgestaltung zwischen 40% und 90% der axialen Schaufelbreite.

Bezüglich der Dimensionierung der Wellen 4, d.h. deren max. Amplitude und Frequenz hat sich herausgestellt, dass die Wellenamplitude max. 25%, vorteilhafter Weise ca. 5% der Wellenlänge nicht übersteigen sollte, um eine lokale Ablösung der Grenzschicht zu vermeiden. Die Amplituden und Wellenlängen lassen sich dabei analytisch über Instabilitätsbetrachtungen der Grenzschicht optimieren. Die wellenförmigen Wirbelerzeuger sind sowohl für Statorschaufeln als auch für Rotorschaufeln insbesondere einer Niederdruckturbine anwendbar.

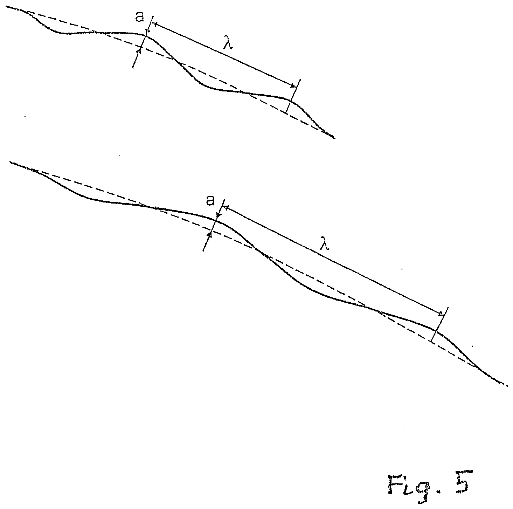

Fig. 5 zeigt hierzu eine - in Relation zur Amplitude a - kürzere Welle mit einem Verhältnis a/λ von etwa 8% und eine längere Welle mit einem Verhältnis a/λ von etwa 5%.

Erreicht wird der erfindungsgemäße Turbulator dadurch, indem die Profiloberfläche selbst entlang deren Schaufelsaugseite 3 abschnittsweise zu einer Wellenform modifiziert wird, beispielsweise durch gezieltes Abgießen bei der Schaufelfertigung oder durch spanabhebende Nacharbeit nach dem Schaufelguss (z.B. ECM, PECM, Schleifen, Fräsen, etc.), wobei das Hauptcharakteristikum der Wellenform die fehlenden scharfen Kanten bildet.

## Patentansprüche

1. Schaufel einer Strömungsmaschine mit einem die Strömung umlenkenden, eine Druck- und Saugseite aufweisenden Profil, insbesondere Turbinenschaufel einer Gasturbine, deren saugseitige Profiloberfläche (3) mindestens eine einen Teil der Profiloberfläche (3) erfassende, geometrische Oberflächeneigenschaft (4) aufweist, die in Form mindestens einer Oberflächenwelle ausgeführt ist, die dem Profil örtlich in der Weise überlagert ist, dass ihr Wellenberg auf dem Profil eine Erhebung, ihr Wellental in dem Profil eine Vertiefung bildet, wobei die Oberflächenwelle an ihrem stromaufwärtigen und an ihrem stromabwärtigen Ende knickfrei und stufenlos in das Profil übergeht und der Wellenberg und das Wellental in Schaufelhöhenrichtung in einem Winkel von 45° bis 135° zur Meridianprojektion der Strömung außerhalb der Schaufelprofil-Grenzschichten verlaufen, **dadurch gekennzeichnet, dass** die geometrische Oberflächeneigenschaft (4) mehrere Oberflächenwellen umfasst, deren Amplituden variieren.

2. Schaufel nach Anspruch I, **dadurch gekennzeichnet, dass** in Strömungsrichtung gesehen abwechselnd Wellentäler und Wellenberge oder Wellenberge und Wellentäler aufeinanderfolgen,

3. Schaufel nach Anspruch 1 oder 2, **dadurch gekennzeichnet, dass** die Wellen (4) eine Sinusform haben oder asymmetrisch ausgebildet sind.

4. Schaufel nach einem der vorstehenden Ansprüche, **dadurch gekennzeichnet, dass** sich die Wellen (4) wenigstens im Kernströmungsbereich der Schaufel zwischen 20-80% der Schaufelhöhe (h) erstrecken, wobei die Wellen (4) einer geraden und/oder gekrümmten Linie folgen, mit konstanter und/oder variierender Amplitude und/oder Wellenlänge.

5. Schaufel nach Anspruch 2, **dadurch gekennzeichnet, dass** die Wellen (4) auf der Saugseitenoberfläche (3) in einem Bereich von 40-90% der axialen Schaufelbreite angeordnet sind.

6. Schaufel nach einem der vorstehenden Ansprüche, **dadurch gekennzeichnet, dass** die Wellen (4) eine max. Amplitude haben, die 5% bis zu 25% der Wellenlänge beträgt.

7. Schaufel nach einem der vorstehenden Ansprüche, **dadurch gekennzeichnet, dass** die Amplituden der Oberflächenwellen (4) in Strömungsrichtung zunehmen.

## Claims

1. Blade of a turbo device having a profile which reverses the flow and has a pressure and suction side, particularly a turbine edge of a gas turbine, the suction-side profile surface (3) which has at least one geometric surface property (4), which covers a part of the profile surface (3), carried out in the shape of at least one surface wave which superimposes the profile locally in such a way that its wave peak forms a deepening on the profile, its trough forms a deepening in the profile, the surface wave being kink-free and step-less in its current end, and the wave peak and the trough in the blade height direction extend at an angle of 45 to 135 degrees to the meridional projection of the flow outside the blade profile boundary layers, **characterized in that** the geometric surface property (4) comprises a plurality of surface waves with various amplitudes.

2. Blade according to Claim 1, **characterized in that** alternately troughs and wave peaks or wave peaks and troughs follow one another in the flow direction.

3. Blade according to Claim 1 or 2, **characterized in that** the waves (4) have a sinusoidal shape or are designed asymmetrically.

4. Blade according to any ane of the preceding Claims, **characterized in that** the waves (4) extend at least in the core flow area of the blade between 20 - 80% of the blade height (h), wherein the waves (4) follow a straight and/or curved line with constant and/or varying amplitude and/or wavelength.

5. Blade according to Claim 2, **characterized in that** the waves (4) are mounted on the suction side surface (3) in a range of 40-90% of the axial blade width.

6. Blade according to any one of the preceding Claims, **characterized in that** the waves (4) have a max. amplitude, which is 5% up to 25% of the wavelength.

7. Blade according to any ane of the preceding Claims, **characterized in that** the amplitudes of the surface waves (4) increase in the flow direction.

## Revendications

1. Aube d'une turbomachine avec un profil déviant l'écoulement, présentant un côté pression et un côté aspiration, en particulier aube de turbine d'une turbine à gaz, dont la surface de profil côté aspiration (3) présente au moins une propriété de surface (4) géométrique, comprenant une partie de la surface de profil (3), qui est réalisée sous la forme d'au moins une onde de surface, qui est superposée localement au profil de manière à ce que son sommet sur le profil forme une élévation, son creux dans le profil un renfoncement, dans laquelle l'onde de surface se transforme au niveau de son extrémité en amont de l'écoulement et à son extrémité en aval de l'écoulement sans coude et en continu en profil et le sommet et le creux s'étendent dans le sens de la hauteur de l'aube sur un angle de 45° à 135° par rapport à la projection méridienne de l'écoulement en dehors des couches limites du profil d'aube, **caractérisée en ce que** la propriété de surface géométrique (4) comprend plusieurs ondes de surface, dont les amplitudes varient.

2. Aube selon la revendication 1, **caractérisée en ce que** des creux et sommets ou des sommets et creux se suivent l'un l'autre vu dans le sens d'écoulement.

3. Aube selon la revendication 1 ou 2, **caractérisée en ce que** les ondes (4) ont une forme sinusoïdale ou sont réalisées de manière asymétrique.

4. Aube selon l'une quelconque des revendications précédentes, **caractérisée en ce que** les ondes (4) s'étendent au moins dans la zone d'écoulement centrale de l'aube entre 20-80 % de la hauteur d'aube (h), dans laquelle les ondes (4) suivent une ligne droite et/ou courbe à amplitude et/ou longueur d'onde constante et/ou variable.

5. Aube selon la revendication 2, **caractérisée en ce que** les ondes (4) sont agencées sur la surface côté aspiration (3) dans une plage de 40-90 % de la largeur d'aube axiale.

6. Aube selon l'une quelconque des revendications précédentes, **caractérisée en ce que** les ondes (4) ont une amplitude maximum qui s'élève de 5 % à 25 % de la longueur d'onde.

7. Aube selon l'une quelconque des revendications précédentes, **caractérisée en ce que** les amplitudes des ondes de surface (4) augmentent dans le sens d'écoulement.
